# EUROPÄISCHE PATENTSCHRIFT

(11) **EP 4 127 502 B1**
(45) Veröffentlichungstag und Bekanntmachung des Hinweises auf die Patenterteilung: **27.08.2025**
(21) Anmeldenummer: 21724547.1
(22) Anmeldetag: 08.03.2021
(51) Int. Cl.: F16D 55/2255

(54) **SCHEIBENBREMSE SOWIE SCHALENBAUGRUPPE ZUR DRUCKÜBERTRAGUNG IN EINER ZUSPANNVORRICHTUNG EINER SCHEIBENBREMSE**
DISK BRAKE AND SHELL ASSEMBLY FOR PRESSURE TRANSMISSION IN A BRAKE APPLICATION DEVICE OF A DISK BRAKE
FREIN À DISQUE ET ENSEMBLE COQUE POUR TRANSMISSION DE PRESSION DANS UN DISPOSITIF D'APPLICATION DE FREIN D'UN FREIN À DISQUE

(30) Priorität: 31.03.2020 DE 102020108865
(43) Veröffentlichungstag der Anmeldung: 08.02.2023
(73) Patentinhaber: BPW Bergische Achsen KG, 51674 Wiehl (DE)
(72) Erfinder: PEHLE, Michael, 51674 Wiehl (DE); KLAAS, Thomas, 51580 Reichshof (DE); STEFFEN, Andreas, 53797 Lohmar (DE)
(74) Vertreter: DREISS Patentanwälte PartG mbB
(86) Internationale Anmeldenummer: PCT/DE2021/100230
(87) Internationale Veröffentlichungsnummer: WO 2021/197536

(56) Entgegenhaltungen:
- EP-A1- 3 499 071
- EP-A2- 1 311 772
- EP-B1- 3 499 071
- WO-A1-2014/041156
- DE-A1- 102014 115 762
- US-A1- 2007 023 239

## Beschreibung

Die Erfindung betrifft eine Schalenbaugruppe zur Druckübertragung in einer Zuspannvorrichtung einer Scheibenbremse gemäß Patentanspruch 1.

Die Erfindung betrifft ferner eine Scheibenbremse mit einem Bremssattel und einer darin angeordneten Zuspannvorrichtung nach dem Oberbegriff des Patentanspruchs 6.

Scheibenbremsen sind in der Regel innerhalb ihres Bremssattels mit einer Zuspannvorrichtung versehen. Diese überträgt und verstärkt die Kraft, mit der dann die beidseits der Brems scheibe angeordneten Bremsbeläge in Kontakt mit der Bremsscheibe gebracht werden, um so durch Reibung die Bremswirkung zu erzielen.

Bei gattungsgemäßen Scheibenbremsen, die oft druckluftbetätigt sind, ist Bestandteil der Zuspannvorrichtung ein verschwenkbar in dem Bremssattel angeordneter Bremshebel. Der Bremshebel besteht aus einem kraftverstärkenden Hebelarm sowie einer im Querschnitt wie ein Exzenter gestalteten Zuspannwelle. An dem Hebelarm stützt sich das Kraftglied der Scheibenbremse ab, z. B. der Druckluftzylinder im Fall einer druckluftbetätigten Scheiben bremse. Die Zuspannwelle des Bremshebels ist einerseits gegen ein zu dem fahrzeuginneren Bremsbelag hin arbeitendes Druckstück abgestützt, und andererseits gegen die Rückseite des Bremssattelgehäuses.

Aus der WO 2019/015716 A1, der DE 10 2012 006 113 A1 und der DE 295 10 331 U1 sind Scheibenbremsen bekannt, welche die vorgenannten Merkmale aufweisen, und bei denen zur rückwärtigen, also bremssattelseitigen Abstützung des Bremshebels die Innenwand des Bremssattel als eine teilzylindrische Rinne, und die Zuspannwelle des Bremshebels andererseits als teilzylindrischer Abschnitt ausgebildet sind. Teils weist beim Stand der Technik auch die Zuspannwelle, der Rinne an dem Bremssattel zugewandt, eine Rinne auf, wobei zwischen den Rinnen eine Stützrolle mit quer zur Zuspannrichtung verlaufender Rollenachse gelagert ist. Zwischen der Stützrolle und der bremssattelseitigen Rinne ist zusätzlich eine Schale angeordnet, die als Gleitschale einen zu hohen Materialabtrag an der Rinne vermeidet. Aufgrund der wiederkehrend hohen Druckkräfte bei den Bremsvorgängen besteht die Gefahr, dass die Schale in Umfangsrichtung aus der bremssattelseitigen Rinne herauswandert. Um dem entgegenzuwirken, verfügt die Schalenbaugruppe aus der WO 2019/015716 A1, zwecks ihrer formschlüssigen Arretierung an der Rinne, über zwei Laschen. Die Laschen sind dazu eingerichtet, sich in komplementären Aussparungen im Bremssattel, die an die Rinne angrenzen, abzustützen.

Aus der DE 10 2014 115762 A 1, US 2007/023239 A 1, EP 1 311 772 A2 und der WO 2014/041156 A1 sind verschiedene Scheibenbremsen bzw. zugehörige Schalenbaugruppen bekannt. Die EP 3 499 071 A 1 zeigt eine Scheibenbremse und Schalenbaugruppe mit Merkmalen der Oberbegriffe der Patentansprüche 1 und 9, bei der einen durch Verformen des Schalenmaterials erzeugte Zapfen zur Sicherung der Lagerschalen vorgesehen sind.

Es hat sich allerdings herausgestellt, dass sich die Laschen bei Dauerbelastung verformten und die Schalenbaugruppen aufgrund der nachlassenden Arretierung anfingen, aus den Rinnen herauszuwandern.

Die Aufgabe der Erfindung besteht darin, durch konstruktive Maßnahmen die Scheiben bremse und die Schalenbaugruppe weiterzuentwickeln, um auch bei langfristiger Nutzung und häufiger Belastung durch Bremsvorgänge ein Herauswandern der Schalenbaugruppe aus der ursprünglichen Position zu vermeiden.

Die Schalenbaugruppe umfasst unter anderem eine Schale, an der auf Seite der konvexen Druckübertragungsfläche eine durch Verformen des Schalenmaterials erzeugte Durchstellung ausgebildet ist, die die Gestalt eines Bundes aufweist. Bestandteil der Schalenbaugruppe ist ferner ein in der Durchstellung angeordnetes Formelement, dessen Außendurchmesser gleich oder nahezu gleich dem Innendurchmesser der Durchstellung ist.

Mit der Scheibenbremse wird eine auch langfristig verbesserte Arretierung der zwischen dem Bremshebel, bzw. der Stützrolle und der Rinne angeordneten Schale gegenüber einem Verlassen der ursprünglichen Schalenposition ermöglicht. Aufgrund des zur Bohrung komplementären Bundes der Durchstellung wird eine Arretierung der Schale in der Rinne erreicht. Um den Bund, aus gelöst durch Dauerbelastung, gegenüber einem Zurückverformen und einem daraus folgenden Spiel der Schale zu verstärken, wird, nach dem Einlegen der Schale in die Rinne und dem Arretieren des Bundes in der Bohrung, ein Formelement in die Durchstellung eingepresst. Das Formelement weitet den Bund leicht auf und fixiert die Vorrichtung so in der Bohrung, wobei das Formelement zusätzlich den Bund gegenüber Abscherkräften unterstützt. Folglich wird sowohl die strukturelle Integrität der Schale, als auch deren dauerhafter Sitz an der ursprünglichen Schalenposition relativ zu der Rinne verbessert.

Bei der Schale der Schalenbaugruppe handelt es sich um ein rechteckiges Flächenelement in Gestalt einer Längsrinne, welches also einen rinnenförmigen Querschnitt von teilkreisförmiger Biegung aufweist. Am tiefsten Punkt der Biegung und Rinne sowie im geographischen Mittelpunkt der Schale ist eine Öffnung in Form einer Durchstellung ausgebildet. Fertigungstechnisch ist die Durchstellung eine Stanzung der Schale hin zu ihrer konvexen Seite, wobei entlang der Öffnungsränder ein zu der konvexen Druckübertragungsfläche orthogonal und umlaufender Bund in Form des verformten Materials ausgebildet ist.

Vorzugsweise ist die am Boden der Rinne mündende Bohrung als Sacklochbohrung ausgebildet. Daher durchdringt die Bohrung das Material der Rinne bzw. des Bremssattels nicht komplett, sondern nur bis zu einer bestimmten Tiefe.

Bevorzugt weist die Länge der Bohrung eine größere Tiefe auf, als die Summe aus der Durchstellung und des aus der Durchstellung ragenden Formelements, wobei die Bohrung eine Tiefe gleich oder größer dem 1,2-fachen der axialen Erstreckung des Formelements beträgt. Eine vom Formelement abhängige Tiefe der Bohrung resultiert daraus, dass das Formelement im Bereich der Durchstellung, genauer auf Höhe des Bundes gehalten wird. Insbesondere darf das Formelement beim Zusammenbau nicht vorzeitig am Grund der Bohrung aufliegen, um nicht in Richtung der Zuspannwelle gedrückt zu werden.

Zugleich muss die Bohrungstiefe so gewählt werden, dass das Formelement, bevor es durch Belastungen beispielsweise in Form von Schwingungen in Richtung der Bohrung aus der Durchstellung gleiten kann, durch die entsprechend bemessene Bohrungstiefe daran gehindert wird. Mithin muss das Formelement auf Höhe des Bundes gehalten werden, bzw. muss das Formelement fortwährend mit seiner Außenfläche an der Innenfläche der Durchstellung anliegen.

Ferner befindet sich eine umlaufende Fase an der Bohrungsöffnung, um eine Scherkante zu vermeiden, die den Bund der Durchstellung im Betriebszustand auf Dauer beeinträchtigen könnte. Das Formelement ragt mit seiner von der Bohrung abgewandten Stirnseite nicht über die Krümmungsebene der konkaven Druckübertragungsfläche hinaus. Mithin darf das Formelement nicht das Niveau der konkaven Druckübertragungsfläche der Schale überschreiten, da es sonst mit der Zuspannwelle in Kontakt gerät und die Oberfläche der Zuspannwelle, durch deren Bewegung bei einem Bremsvorgang, beschädigen könnte. Ferner könnte ein Kontakt zwischen dem Formelement und der Zuspannwelle eine Schwergängigkeit des Bremshebels verursachen.

Vorzugsweise ist die Zuspannwelle ausgebildet, zwischen sich und der Schale eine Stützrolle aufzunehmen. Die Stützrolle ist auf einem Teilumfang an der Zuspannwelle drehbar oder formschlüssig gelagert, und an einem anderen Teilumfang an der Schale drehbar gelagert ist. Die Verwendung einer Stützrolle birgt den Vorteil, dass der Bremshebel nur hin zum Druck stück mit einem fertigungstechnisch aufwändigen Teilwalzenabschnitt ausgebildet werden muss, wobei zum Bremssattel hin eine teilzylindrische Ausnehmung im Bremshebel die Stützrolle vorzugsweise drehfest aufnimmt. Trotz des Hinzutretens der Stützrolle als weiteres Bauteil wird der Produktionsaufwand durch die teilzylindrische Ausnehmung im Vergleich zu einem zweiten Teilwalzenabschnitt gesenkt.

Vorzugsweise weist die Schale der Schalenbaugruppe auf ihrer konkaven Druckübertragungsfläche eine Reibung reduzierende Oberflächenbeschichtung auf. Die Schale ist durch die Durchstellung auf ihrer konvexen Seite formschlüssig in der Rinne arretiert, wobei die Zu spannwelle oder die Stützrolle an der konkaven Seite der Schale mittels einer Gleitlagerung anliegen. Um die Leichtgängigkeit zu erhalten und den Materialverschleiß zwischen der Zu spannwelle bzw. der Stützrolle und der konkaven Druckübertragungsfläche auf ein Minimum zu reduzieren, sorgt die reibungsreduzierende Oberflächenbeschichtung auf der Schale für ein schonenderes an einander Gleiten der Komponenten.

Bevorzugt ist das Formelement ein Zylinderstift, wobei vorzugsweise der Zylinderstift aus ungehärtetem und austenitischem, nichtrostendem Stahl ausgebildet ist. Der Zylinderstift ist nach den Toleranzen und Maßen der EN ISO 2338 : 1997 gefertigt, wobei auch Zylinderstifte aus der ISO 3269 : 1988, der ISO 3506-1 : 1997, der ISO 4042 : - und aus der ISO 9717 : 1990 gewählt werden können.

Es können aber auch Zylinderstifte anderer Normen gewählt werden. Jedoch ist deren Korrosionsbeständigkeit notwendig, um bei fortwährendem, potentiell korrosiv wirkendem Kontakt mit der Umwelt einer Korrosion entgegen zu wirken und die Langlebigkeit des Formelements zu erhöhen.

Weitere vorteilhafte Maßnahmen werden nachstehend gemeinsam mit der Beschreibung eines bevorzugten Ausführungsbeispiels anhand der Figuren näher erläutert. Dabei zeigt:
Fig. 1 eine Explosionszeichnung eines Bremssattels, zweier Stützrollen und eines Bremshebels mit am Bremssattel befestigter Schale,
Fig. 2 einen schematischen Querschnitt einer mittels eines Formelements und einer Durchstellung gegenüber einer bremssattelseitigen Rinne arretierten Schalen baugruppe, und
Fig. 3 eine perspektivische Darstellung der Schalenbaugruppe mit integriertem Formelement in arretierter Position an einer bremssattelseitigen Rinne.

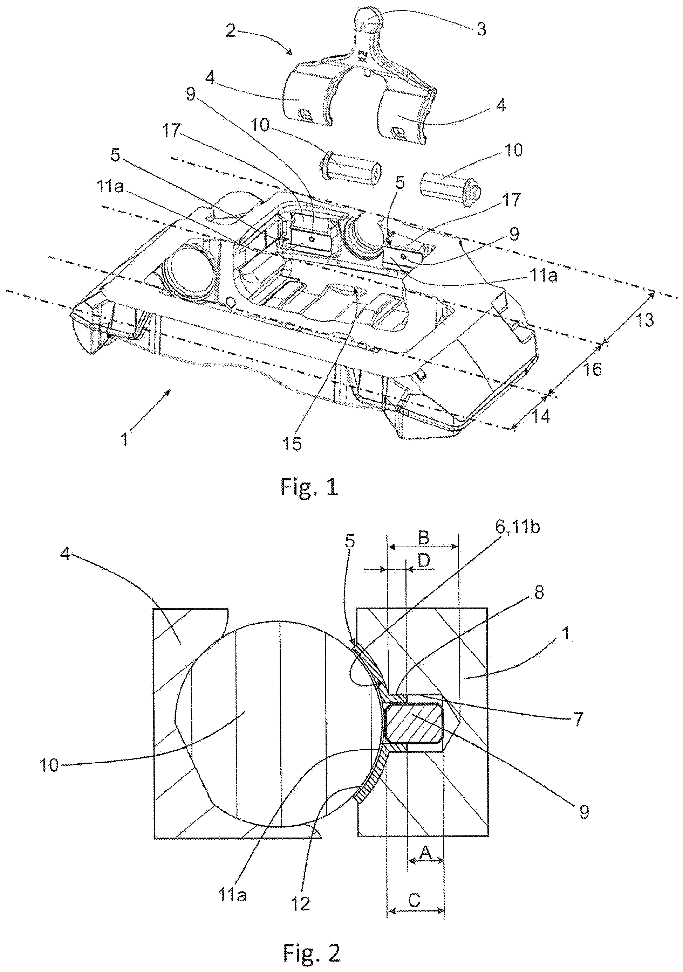

Die Figur 1 zeigt eine Explosionszeichnung eines Bremssattels 1 mit in zwei teilzylindrischen Rinnen 6 des Bremssattels eingesetzten Schalen 5 sowie einem Bremshebel 2 und zwei Stützrollen 10. Der Bremssattel 1 ist von der Bauart eines Schiebesattel- oder Schwimmsatteltyps einer Scheibenbremse, insbesondere einer druckluftbetätigten Scheibenbremse.

Der in einem einzigen Stück gegossene Bremssattel 1 setzt sich aus drei Abschnitten zusammen. Ein erster Sattelabschnitt 13, welcher sich bei montierter Scheibenbremse fahrzeuginnen befindet, ist in seinem Inneren mit einem Hohlraum 15 versehen, welcher Platz für eine Bremszuspannvorrichtung bietet. Ein zweiter Sattelabschnitt 14, welcher sich bei montierter Bremse fahrzeugaußen befindet, ist auf der gegenüberliegenden Seite der nicht dargestellten Bremsscheibe der Scheibenbremse angeordnet. Die beiden Sattelabschnitte 13, 14 sind durch einen Brückenabschnitt 16 miteinander verbunden, der die nicht dargestellte Bremsscheibe überbrückt und dabei einen Freiraum für zumindest einen Teil der Brems scheibe und für die ebenfalls nicht dargestellten Bremsbeläge bereitstellt.

Der Bremssattel 1 ist hier einstückig insoweit, als die beiden Sattelabschnitte 13, 14 und der Brückenabschnitt 16 monolithisch ausgebildet sind. Der erste Sattelabschnitt 13 ist zu dem Freiraum der Brückenabschnitte 16 und damit zu einer Bremsscheibe hin offen. Diese Öffnung dient u. a. als Montageöffnung und ist so groß, dass durch sie hindurch die Zuspannvorrichtung montiert werden kann. Die Öffnung wird, nach abgeschlossener Bremsenmontage, durch einen Deckel verschlossen. Ein durch einen Druckluft-Bremszylinder betätigbarer Bremshebel 2 ist insgesamt gabelförmig, da er sich, ausgehend von dem auf der Schwenkmittellinie angeordneten Hebelarm 3, in zwei Schenkel verzweigt. An dem ersten Schenkel befindet sich ein erster Längsabschnitt, und an dem zweiten Schenkel ein zweiter Längsabschnitt einer mit dem Hebelarm 3 einstückigen Zuspannwelle 4. Da die Zuspannwelle 4 aufgeteilt ist auf zwei Längsabschnitte, sind an dem Bremshebel 2 zwei getrennte, aber zueinander fluchtende Rinnen für die Abstützung je einer als Walze ausgebildeten Stützrolle 10 ausgebildet.

Die Zuspannwelle 4 ist im montierten Zustand einerseits über die Walzen bzw. Stützrollen 10 gegenüber dem ersten Sattelabschnitt 13 abgestützt, und andererseits gegenüber einem zu dem inneren Bremsbelag der Scheibenbremse hin arbeitenden Druckstück abgestützt, welches also Kraft gegen den fahrzeuginneren Bremsbelag der Scheibenbremse ausübt.

Als Bestandteil der Abstützung der Zuspannwelle 4 ist zwischen jedem der zwei Längsabschnitte der Zuspannwelle 4 und einer innen an dem ersten Sattelabschnitt 13 ausgebildeten Rinne 6 jeweils eine im Fall ihres Verschleißes austauschbare Schale 5 als Gleitlagerschale angeordnet. Denn bei eingetretenem Verschleiß ist der Austausch nur der Schalen 5 wesentlich vorteilhafter, als der Austausch des Bremssattels wegen eines Verschleißes an den Rinnen 6.

Die zwei mit Abstand zueinander angeordneten Rinnen 6 an der Innenwand des ersten Sattelabschnitts 13 sind zwecks Anlage der Schalen 5 jeweils als eine teilzylindrische Aussparung gestaltet. Dies vereinfacht die Herstellbarkeit der Rinnen 6, zumal die Rinnen 6 so zueinander fluchten, dass sie in einem Arbeitsgang zu bearbeiten sind.

Gemäß Figur 1 ist die Zuspannwelle 4 zum Erzielen einer hohen Zuspannkraft exzentrisch gelagert. Denn das gegen den Bremssattel 1 abgestützte Schwenklager ist in der Höhe versetzt im Vergleich zu der nicht dargestellten Schwenkachse des zwischen der Zuspannwelle 4 und dem nicht dargestellten Druckstück angeordneten Schwenklagers. Bei einem Verdrehen der exzentrisch gelagerten Zuspannwelle 4 kommt es daher in Zuspannrichtung zu einer Vorwärtsbewegung auf das Druckstück sowie als Reaktion zu einer entsprechenden Druckerhöhung auf die Schale 5, wodurch die Bremse zuspannt und Bremskraft ausübt.

Dem Verdrehen der Zuspannwelle 4 dient der daran einstückig ausgebildete Hebelarm 3. Dieser ist, nahe seinem freien Ende, mit einem Abstützort versehen, gegen den Druck ausgeübt wird. Bei druckluftbetätigten Scheibenbremsen ist diese kraftausübende Vorrichtung ein pneumatischer Bremszylinder, welcher durch das Druckluftsystem des Fahrzeugs mit Druckluft versorgt wird.

Figur 2 ist ein schematischer Querschnitt der mittels einer Durchstellung 8 und einem Formelement 9 in der Rinne 6 arretierten Schale 5. Jede der beiden Schalen 5 besteht aus einem ursprünglich flachen, durch Stanzen und Verformen hergestellten Metallblech.

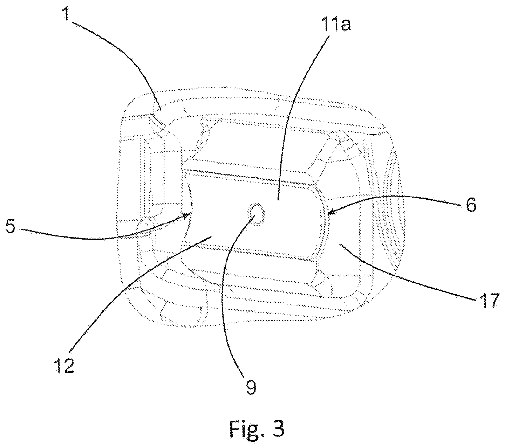

Gemäß Figur 2 und Figur 3 weist die Schale 5 eine Mantelfläche auf, wobei die Mantelfläche in Längsrichtung der Zuspannwelle 4 gesehen einen teilkreisförmigen Querschnitt aufweist. Die Schale 5 hat also einerseits eine konkave Druckübertragungsfläche 11a zur Abstützung des Bremshebels 2 der Zuspannvorrichtung, und andererseits eine konvexe Druckübertragungsfläche 11b zur Abstützung gegen das als Rinne 6 gestaltete Widerlager innen am Bremssattel.

Am tiefsten Ort der Rinne 6 befindet sich die Mündung einer Bohrung 7 im Bremssattel. An der Schale 5 ist, der Rinne 6 zugewandt, eine durch Verformen des Schalenmaterials erzeugte Durchstellung 8 ausgebildet. Die Durchstellung 8 erstreckt sich in Gestalt eines Bundes in die Bohrung 7 des Bremssattels hinein und sichert einen Formschluss zwischen der Schale 5 und der Rinne 6.

Positionsfest in der Durchstellung 8 ist ein als Zylinder gestaltetes Formelement 9 angeordnet, dessen Außendurchmesser gleich dem Innendurchmesser der Durchstellung 8 ist. Vor zugsweise ist das Formelement 9 in der Durchstellung 8 mittels einer Übergangs- oder einer Presspassung eingepresst. Schale 5, Durchstellung 8 und Formelement 9 bilden dabei gemeinsam eine Schalenbaugruppe.

Die Bohrung 7 ist eine zu der Längsachse der Rinne 6 senkrechte Sacklochbohrung. Die Länge der Bohrung 7 weist eine größere Tiefe auf als die Summe aus der Länge der Durchstellung 8 und des aus der Durchstellung 8 ragenden Formelements 9, wobei die Bohrung 7 eine Tiefe von z. B. dem 1,2-fachen der axialen Erstreckung des Formelements 9 beträgt.

Das Formelement 9 der Schalenbaugruppe ist mit seiner von der Bohrung 7 abgewandten Stirnseite dazu ausgebildet, nicht über die Krümmungsebene der konkaven Druckübertragungsfläche 11a der Schale 5 hinauszuragen. Mit anderen Worten muss die Bohrungstiefe B so groß sein, dass sie die Länge C des in der Durchstellung 8 arretierten Formelements 9, mit seiner aus der Durchstellung 8 ragenden Restlänge A, in Summe mit der Höhe des Bundes D der Durchstellung 8, überschreitet. Außerdem darf die Bohrungstiefe B die Länge C des Formelements nicht so weit überschreiten, dass bei einer Lockerung des Formelements 9 innerhalb der Durchstellung 8 das Formelement 9 aus der Durchstellung 8 komplett in die Bohrung 7 gleiten könnte. Die Fig. 3 zeigt eine perspektivische Darstellung der Schalenbaugruppe umfassend die Schale 5 und das integrierte Formelement 9, und zwar arretiert an der Rinne 6.

Zur Ausbildung der Rinnen 6 sind innen am ersten Sattelabschnitt 13 Plateaus 17 ausgebildet, wobei die Plateaus 17 monolithisch mit dem Bremssattel 1 ausgebildet sind. Die Ausbildung von Plateaus 17 und der darin ausgebildeten Rinnen 6 bilden eine herstellungstechnisch günstige Anordnung, um Arbeitsschritte und die Komplexität der Herstellung zu mindern.

Um die Lebensdauer der Schalenbaugruppe zu erhöhen, weist die Schale 5 auf ihrer konkaven Druckübertragungsfläche 11a eine reibungsreduzierende Oberflächenbeschichtung 12 auf, auf der die Stützrolle 10 im Vergleich zu einer unbeschichteten Oberfläche mit geringerer Reibungskraft zu drehen vermag.

### Bezugszeichen

1 Bremssattel
2 Bremshebel 3 Hebelarm
4 Zuspannwelle
5 Schale
6 Rinne
7 Bohrung 8 Durchstellung
9 Formelement
10 Stützrolle
11a konkave Druckübertragungsfläche
11b konvexe Druckübertragungsfläche 12 reibungsreduzierende Oberflächenbeschichtung
13 erster Sattelabschnitt
14 zweiter Sattelabschnitt
15 Hohlraum
16 Brückenabschnitt 17 Plateau
A Teillänge Formelement ab Ende Bundhöhe
B Bohrungstiefe
C Länge Formelement
D Bundhöhe

## Patentansprüche

1. Schalenbaugruppe zur Druckübertragung in einer Zuspannvorrichtung einer Scheibenbremse,
mit einer Schale (5),
an der einerseits eine konkave Druckübertragungsfläche (11a) zur Abstützung eines Bremshebels der Zuspannvorrichtung und
andererseits eine konvexe Druckübertragungsfläche (11b) zur Abstützung gegen ein als Rinne gestaltetes Widerlager ausgebildet ist,
wobei an der Schale (5) auf Seite der konvexen Druckübertragungsfläche (11b) eine durch Verformen des Schalenmaterials erzeugte Durchstellung (8) in Gestalt eines Bundes ausgebildet ist,
**dadurch gekennzeichnet,**
**dass** Bestandteil der Schalenbaugruppe ein Formelement (9) ist, das in der Durchstellung (8) angeordnet ist, dessen Außendurchmesser gleich ist dem Innendurchmesser der Durchstellung (8) ist.

2. Schalenbaugruppe nach Anspruch 1, **dadurch gekennzeichnet, dass** die Schale (5) auf ihrer konkaven Druckübertragungsfläche (11a) eine reibungsreduzierende Oberflächenbeschichtung (12) aufweist.

3. Schalenbaugruppe nach Anspruch 1 oder 2, **dadurch gekennzeichnet, dass** das Formelement (9) als ein Zylinderstift ausgebildet ist.

4. Schalenbaugruppe nach Anspruch 3, **dadurch gekennzeichnet, dass** der Zylinderstift aus ungehärtetem und austenitischem, nichtrostendem Stahl besteht.

5. Schalenbaugruppe nach einem der Ansprüche 1 bis 4, **dadurch gekennzeichnet, dass** das Formelement (9) mit seiner von der Bohrung (7) abgewandten Stirnseite nicht über die Krümmungsebene der konkaven Druckübertragungsfläche (11a) hinausragt.

6. Scheibenbremse mit einer Schalenbaugruppe gemäß einem der vorhergehenden Ansprüche und mit einem Bremssattel (1) und einer darin angeordneten Zuspannvorrichtung für die Kraftbeaufschlagung der Bremsbeläge der Scheibenbremse, wobei Bestandteil der Zuspannvorrichtung ein durch ein Kraftglied und vorzugsweise einen Druckzylinder betätigbarer Bremshebel (2) ist, der sich zusammensetzt aus einem Hebelarm (3), gegen den das Kraftglied abgestützt ist, und einer Zuspannwelle (4), die einerseits gegen ein in Richtung zu den Bremsbelägen arbeitendes Druckstück, und die andererseits, unter Zwischenlage der Schale (5), gegenüber einer innen an dem Bremssattel angeordneten Rinne (6) abgestützt ist, wobei die Krümmung der Schale (5) komplementär zu der Krümmung der Rinne (6) ist, wobei sich in der Rinne (6) eine Mündung einer Bohrung (7) befindet, dass an der Schale (5), der Rinne (6) zugewandt, die durch Verformen des Schalenmaterials erzeugte Durchstellung (8) ausgebildet ist, die sich in Gestalt eines Bundes in die Bohrung (7) hinein erstreckt und einen Formschluss zwischen der Schale (5) und der Rinne (6) herstellt.

7. Scheibenbremse nach Anspruch 6, **gekennzeichnet durch** eine Sacklochbohrung als Bohrung (7).

8. Scheibenbremse nach Anspruch 7, **dadurch gekennzeichnet, dass** die Länge der Bohrung (7) eine größere Tiefe aufweist, als die Summe aus der Durchstellung (8) und des aus der Durchstellung (8) ragenden Formelements (9), wobei die Bohrung (7) eine Tiefe gleich oder größer dem 1,2-fachen der axialen Erstreckung des Formelements (9) beträgt.

9. Scheibenbremse nach einem der vorhergehenden Ansprüche 6 bis 8, **dadurch gekennzeichnet, dass** die Zuspannwelle (4) ausgebildet ist, zwischen sich und der Schale (5) mindestens eine Stützrolle (10) aufzunehmen, wobei die Stützrolle (10) auf einem Teilumfang an der Zuspannwelle (4) drehbar oder formschlüssig gelagert und an einem Teilumfang an der Schale (5) drehbar gelagert ist.

10. Scheibenbremse nach einem der vorhergehenden Ansprüche 6 bis 9, **dadurch gekennzeichnet, dass** die Schale (5) auf ihrer konkaven Seite eine reibungsreduzierende Oberflächenbeschichtung (12) aufweist.

11. Scheibenbremse nach einem der vorhergehenden Ansprüche 6 bis 10, **dadurch gekennzeichnet, dass** das Formelement (9) als ein Zylinderstift ausgebildet ist.

12. Scheibenbremse nach Anspruch 11, **dadurch gekennzeichnet, dass** der Zylinderstift aus ungehärtetem und austenitischem, nichtrostendem Stahl ausgebildet ist.

13. Scheibenbremse nach einem der vorhergehenden Ansprüche 6 bis 12, **dadurch gekennzeichnet, dass** das Formelement (9) mit seiner von der Bohrung (7) abgewandten Stirnseite nicht über eine gebildete Krümmungsebene der konkaven Druckübertragungsfläche hinausragt.

## Claims

1. Shell assembly for pressure transmission in an application device of a disk brake,
comprising a shell (5),
on which, on one side, a concave pressure transmission surface (11a) for supporting a brake lever of the application device and
on the other side, a convex pressure transmission surface (11b) for support against an abutment designed as a groove is formed,
a passage (8) in the form of a collar, which is produced by deforming the shell material, being formed on the shell (5) on the side of the convex pressure transmission surface (11b),
**characterized in that**
a component of the shell assembly is a shaped element (9) which is arranged in the passage (8), the outer diameter of which shaped element is equal to the inner diameter of the passage (8).

2. Shell assembly according to claim 1, **characterized in that** the shell (5) has a friction-reducing surface coating (12) on its concave pressure transmission surface (11a).

3. Shell assembly according to claim 1 or claim 2, **characterized in that** the shaped element (9) is designed as a cylindrical pin.

4. Shell assembly according to claim 3, **characterized in that** the cylindrical pin consists of unhardened and austenitic stainless steel.

5. Shell assembly according to any of claims 1 to 4, **characterized in that** the shaped element (9), with its end face facing away from the bore (7), does not protrude beyond the plane of curvature of the concave pressure transmission surface (11a).

6. Disk brake comprising a shell assembly according to any of the preceding claims and comprising a brake caliper (1) and an application device arranged therein for applying force to the brake pads of the disk brake, wherein a component of the application device is a brake lever (2) which can be actuated by a force element and preferably by a pressure cylinder, which brake lever is composed of a lever arm (3) against which the force element is supported and an application shaft (4) which is supported, on one side, against a pressure piece operating in the direction of the brake pads, and, on the other side, with the interposition of a shell (5), against a channel (6) arranged on the inside of the brake caliper, wherein the curvature of the shell (5) is complementary to the curvature of the channel (6), wherein an opening of a bore (7) is located in the channel (6), wherein a passage (8) produced by deformation of the shell material is formed on the shell (5), facing the channel (6), which passage extends into the bore (7) in the form of a collar to produce a positive fit between the shell (5) and the channel (6).

7. Disk brake according to claim 6, **characterized by** a blind bore as the bore (7).

8. Disk brake according to claim 7, **characterized in that** the length of the bore (7) has a greater depth than the sum of the passage (8) and of the shaped element (9) protruding from the passage (8), the bore (7) having a depth equal to or greater than 1.2 times the axial extension of the shaped element (9).

9. Disk brake according to any of the preceding claims 6 to 8,
**characterized in that** the application shaft (4) is designed to receive at least one support roller (10) between itself and the shell (5), the support roller (10) being rotatably or positively mounted on the application shaft (4) on a partial circumference and being rotatably mounted on the shell (5) on a partial circumference.

10. Disk brake according to any of the preceding claims 6 to 9,
**characterized in that** the shell (5) has a friction-reducing surface coating (12) on its concave side.

11. Disk brake according to any of the preceding claims 6 to 10,
**characterized in that** the shaped element (9) is designed as a cylindrical pin.

12. Disk brake according to claim 11, **characterized in that** the cylindrical pin is made of unhardened and austenitic stainless steel.

13. Disk brake according to any of the preceding claims 6 to 12,
**characterized in that** the shaped element (9), with its end face facing away from the bore (7), does not protrude beyond a formed plane of curvature of the concave pressure transmission surface.

## Revendications

1. Ensemble de coquilles pour la transmission de pression dans un dispositif de serrage d'un frein à disque,
avec une coquille (5),
sur laquelle se trouve d'une part une surface concave de transmission de pression (11a) pour l'appui d'un levier de frein du dispositif de serrage et
d'autre part, une surface convexe de transmission de pression (11b) est réalisée pour s'appuyer contre une butée conçue comme une gouttière,
dans lequel un passage (8) sous la forme d'une collerette, produit par déformation du matériau de coquille, est réalisé sur la coquille (5) du côté de la surface convexe de transmission de pression (11b),
**caractérisé en ce**
**que** le composant de l'ensemble de coquilles est un élément façonné (9) qui est disposé dans le passage (8) et dont le diamètre extérieur est égal au diamètre intérieur du passage (8).

2. Ensemble de coquilles selon la revendication 1, **caractérisé en ce que** la coquille (5) présente sur sa surface concave de transmission de pression (11a) un revêtement de surface (12) réduisant la friction.

3. Ensemble de coquilles selon la revendication 1 ou 2, **caractérisé en ce que** l'élément façonné (9) peut être réalisé sous la forme d'une goupille cylindrique.

4. Ensemble de coquilles selon la revendication 3, **caractérisé en ce que** la goupille cylindrique est constituée d'acier inoxydable non trempé et austénitique.

5. Ensemble de coquilles selon l'une quelconque des revendications 1 à 4, **caractérisé en ce que** l'élément façonné (9) ne dépasse pas, avec sa face frontale opposée à l'alésage (7), le plan de courbure de la surface concave de transmission de pression (11a).

6. Frein à disque avec un ensemble de coquilles selon l'une quelconque des revendications précédentes et avec un étrier de frein (1) et un dispositif de serrage disposé dans celui-ci pour l'application de la force aux garnitures de frein du frein à disque, dans lequel un levier de frein (2) pouvant être actionné par un organe de force et de préférence un cylindre de pression, qui se compose d'un bras de levier (3) contre lequel s'appuie l'organe de force, et d'un arbre de serrage (4) qui, d'une part, s'appuie contre une pièce de pression travaillant en direction des garnitures de frein, et qui, d'autre part, s'appuie avec interposition de la coquille (5) en vis-à-vis d'une gouttière (6) disposée à l'intérieur de l'étrier de frein, fait partie du dispositif de serrage, dans lequel la courbure de la coquille (5) est complémentaire de la courbure de la gouttière (6), dans lequel une embouchure d'un alésage (7) se trouve dans la gouttière (6), que sur la coquille (5), tournée vers la gouttière (6), est réalisé le passage (8) produit par déformation du matériau de coquille, qui s'étend sous la forme d'une collerette à l'intérieur de l'alésage (7) et établit une liaison par coopération de formes entre la coquille (5) et la gouttière (6).

7. Frein à disque selon la revendication 6, **caractérisé par** un trou borgne comme alésage (7).

8. Frein à disque selon la revendication 7, **caractérisé en ce que** la longueur de l'alésage (7) présente une profondeur supérieure à la somme du passage (8) et de l'élément façonné (9) dépassant du passage (8), dans lequel l'alésage (7) présente une profondeur égale ou supérieure à 1,2 fois l'étendue axiale de l'élément façonné (9).

9. Frein à disque selon l'une quelconque des revendications précédentes 6 à 8, **caractérisé en ce que** l'arbre de serrage (4) est réalisé pour recevoir entre lui et la coquille (5) au moins un galet d'appui (10), dans lequel le galet d'appui (10) est monté à rotation ou par complémentarité de formes sur une partie de sa périphérie sur l'arbre de serrage (4) et monté à rotation sur une partie de sa périphérie sur la coquille (5).

10. Frein à disque selon l'une quelconque des revendications précédentes 6 à 9, **caractérisé en ce que** la coquille (5) présente sur sa face concave un revêtement de surface (12) réduisant la friction.

11. Frein à disque selon l'une quelconque des revendications précédentes 6 à 10, **caractérisé en ce que** l'élément façonné (9) est réalisé sous la forme d'une goupille cylindrique.

12. Frein à disque selon la revendication 11, **caractérisé en ce que** la goupille cylindrique est réalisée en acier inoxydable non trempé et austénitique.

13. Frein à disque selon l'une quelconque des revendications précédentes 6 à 12, **caractérisé en ce que** l'élément façonné (9) ne dépasse pas, avec sa face frontale opposée à l'alésage (7), un plan de courbure formé de la surface concave de transmission de pression.
